# EUROPEAN PATENT SPECIFICATION

(11) **EP 3 376 344 B1**
(45) Date of publication and mention of the grant of the patent: **23.09.2020**
(21) Application number: 18150951.4
(22) Date of filing: 10.01.2018
(51) Int. Cl.: G06F 3/01, G06F 3/023, G06F 3/0488, G06F 40/171

(54) **CHARACTER INPUT DEVICE, CHARACTER INPUT METHOD, AND CHARACTER INPUT PROGRAM**
ZEICHENEINGABEVORRICHTUNG, ZEICHENEINGABEVERFAHREN UND ZEICHENEINGABEPROGRAMM
DISPOSITIF DE SAISIE DE CARACTÈRES, PROCÉDÉ DE SAISIE DE CARACTÈRES ET PROGRAMME DE SAISIE DE CARACTÈRES

(30) Priority: 15.03.2017 JP 2017049504
(43) Date of publication of application: 19.09.2018
(73) Proprietor: OMRON CORPORATION, Kyoto-shi, Kyoto 600-8530 (JP)
(72) Inventor: TAKAYA, Mieko, Kyoto-shi, Kyoto 604-8152 (JP)
(74) Representative: Horn Kleimann Waitzhofer Patentanwälte PartG mbB

(56) References cited:
- US-A1- 2004 071 344
- US-A1- 2016 321 238

## Description

### CROSS-REFERENCES TO RELATED APPLICATIONS

This application claims priority to Japanese Patent Application No. 2017-049504 filed March 15, 2017.

### FIELD

This invention relates to a character input technology provided with a function of utilizing handwritten characters.

### BACKGROUND

Technologies for preliminarily registering character strings in a mobile communication terminal or the like in association with pictographs, so as to be able to efficiently call the pictographs registered in advance, at the time of performing character input with the terminal are known, as shown in JP 2009-15743A.

Also, technologies for registering keywords for pictographs or images in advance and manipulating pictographs and images based on the keywords are known, as shown in JP 2008-129687A and WO 2012/46546A1.

JP 2009-15743A, JP 2008-129687A and WO 2012/46546A1 are examples of background art.

However, in the case where the technologies shown in JP 2009-15743A, JP 2008-129687A and WO 2012/46546A1 are used, character strings need to be registered in advance for pictographs and other images. Even in the case of creating an image that contains a character string, the character string must be associated separately after saving the image, and efficiency is impaired.

US 2016/0321238 A1 discloses an electronic device including a microphone generating audio data, a screen detecting a stroke input made on a surface thereof and displaying the stroke, a memory that stores different handwritings, and a processor. The processor is configured to search the memory for first and second handwriting candidates in response to a handwritten stroke made on the screen, determine whether a first or second character string of the first or second handwriting candidate matches a third character string of a word in the audio data, and display the first handwriting candidate at a first position and the second handwriting candidate at a second position on the screen. The second position is arranged closer to an input position of the handwritten stroke on the surface than the first position, if the first character string does not match the third character string and the second character string matches the third character string.

US 2004/0071344 A1 discloses a user interface that allows a user to input handwritten, key-press, and spoken text in a seamless, synchronized manner. A text input panel accepts soft keyboard presses and handwritten words, characters, and gestures. A text recognizer/synchronizer integrates textual input from various sources while recognizing and preserving the order in which a user entered text via the soft keyboard, via handwriting, and/or by speaking. Synchronized text may be displayed in a stage area of the text input panel before being passed to an operating system message router and/or an application program. While in handwriting recognition mode, various permutations and combinations of a word recognition area, a character recognition area, and a keybar/keypad may optionally be displayed.

Accordingly, an object of the present invention is to automatically acquire a reading of handwritten characters from an image of the handwritten character and to register both the image and the reading together. Also, an object of the present invention is to efficiently utilize the image of the handwritten character, by using the reading.

### SUMMARY

A character input device of this invention has the features recited in claim 1.

With this configuration, characters input by handwriting can be converted to a stamp and managed. Also, a reading of the stamp can be automatically recognized, and this reading and the stamp can be saved in association with each other. Also, the stamp can be utilized at the timing at which it is saved.

Also, an operation unit of the character input device of this invention has a key input function. Also, the input character management unit may associate the stamp with a character string keyed in with the operation unit, in the case where a reading cannot be recognized by the character recognition unit.

With this configuration, even in the case where a reading cannot be recognized by the character recognition unit, a character string keyed in with the operation unit is associated with the stamp.

Also, the input character management unit of the character input device of this invention may associate the reading which is changed with the operation unit with the stamp.

With this configuration the reading can be changed.

Also, the operation unit of the character input device of this invention is provided with a candidate display unit. The input character management unit outputs the stamp as a conversion candidate to the candidate display unit when the character string input with the operation unit matches the reading.

With this configuration, a stamp that matches a character string input with the operation unit can be output to the candidate display unit as one conversion candidate.

Also, the character input device of this invention may include a transmission unit configured to transmit the stamp to an application, and the stamp which is selected with the candidate display unit is transmitted.

With this configuration, a stamp selected with the candidate display unit and keyed-in characters can be transmitted to an application.

According to this invention, an image and a reading of handwritten characters can be efficiently registered, and the image of the handwritten characters can be efficiently utilized, by using the reading.

### BRIEF DESCRIPTION OF THE DRAWINGS

Fig. 1 is a block diagram showing a main configuration of a character input device according to a first embodiment of the present invention.
Fig. 2A is a schematic diagram of an operation unit according to the first embodiment of the present invention, and Fig. 2B is a schematic diagram of the operation unit when a handwriting input function has been activated.
Fig. 3 is a diagram showing the association between the operation unit and a saving unit according to the first embodiment of the present invention.
Fig. 4 is a flowchart at the time of a new registration according to the first embodiment of the present invention.
Figs. 5A and 5B are schematic diagrams of operations of the character input device at the time of using a handwriting stamp according to the first embodiment of the present invention.
Fig. 6 is a flowchart at the time of utilizing a stamp according to the first embodiment of the present invention.
Fig. 7 is a functional block diagram of a character input device according to a second embodiment of the present invention.
Fig. 8 is a flowchart at the time of changing a reading according to the second embodiment of the present invention.

### DETAILED DESCRIPTION

### First Embodiment

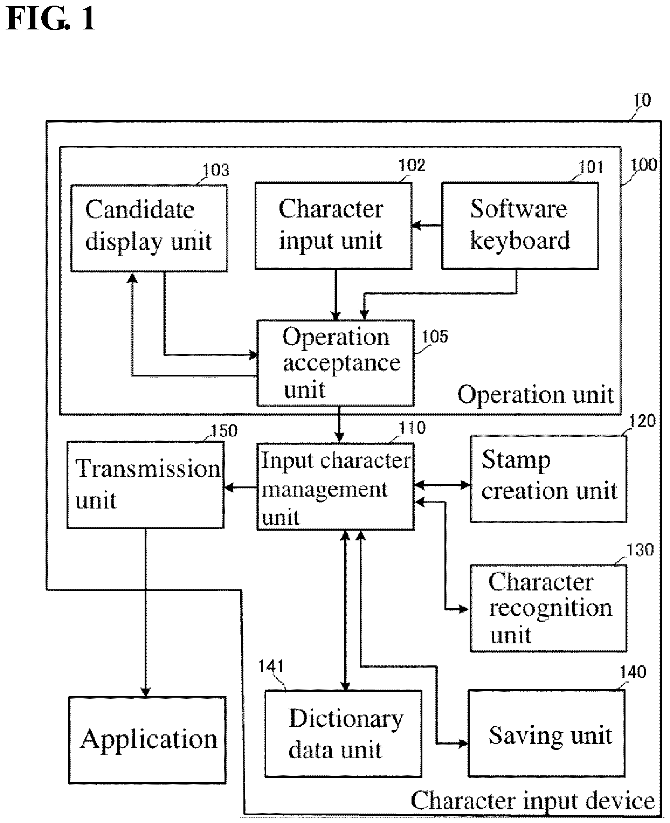

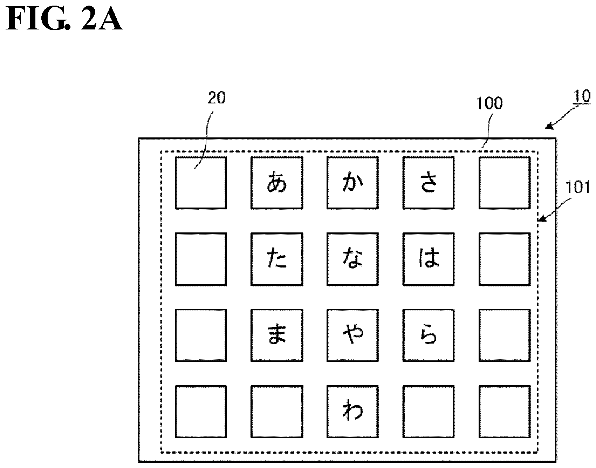

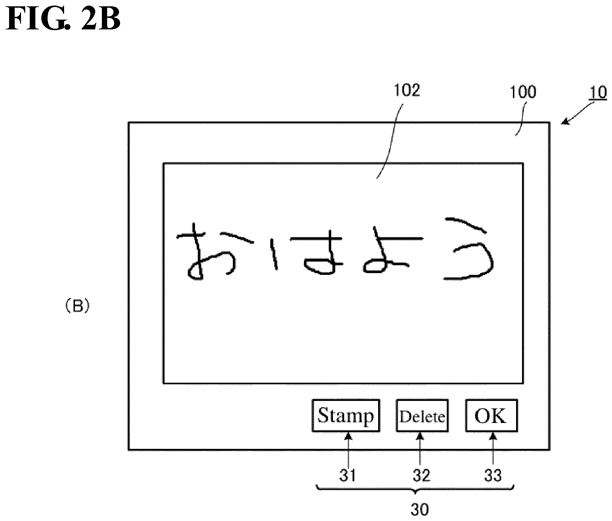

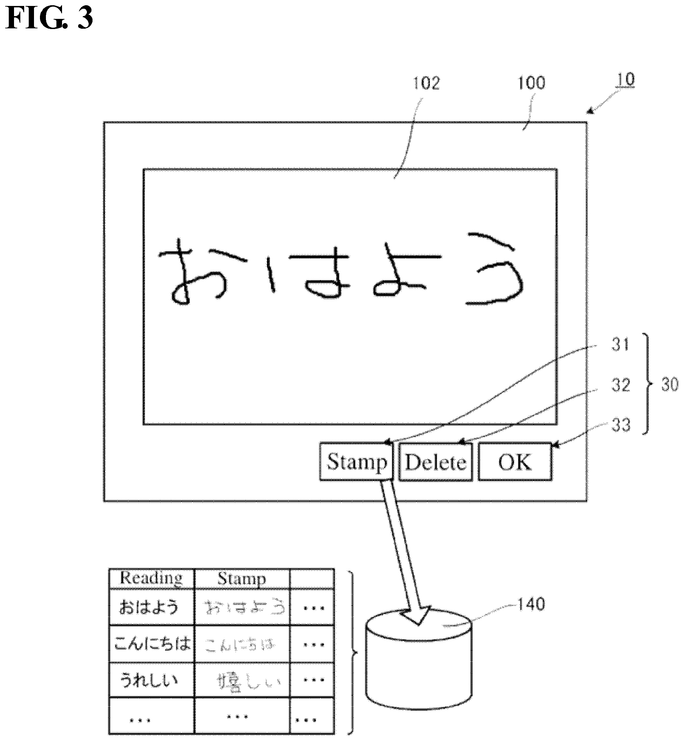

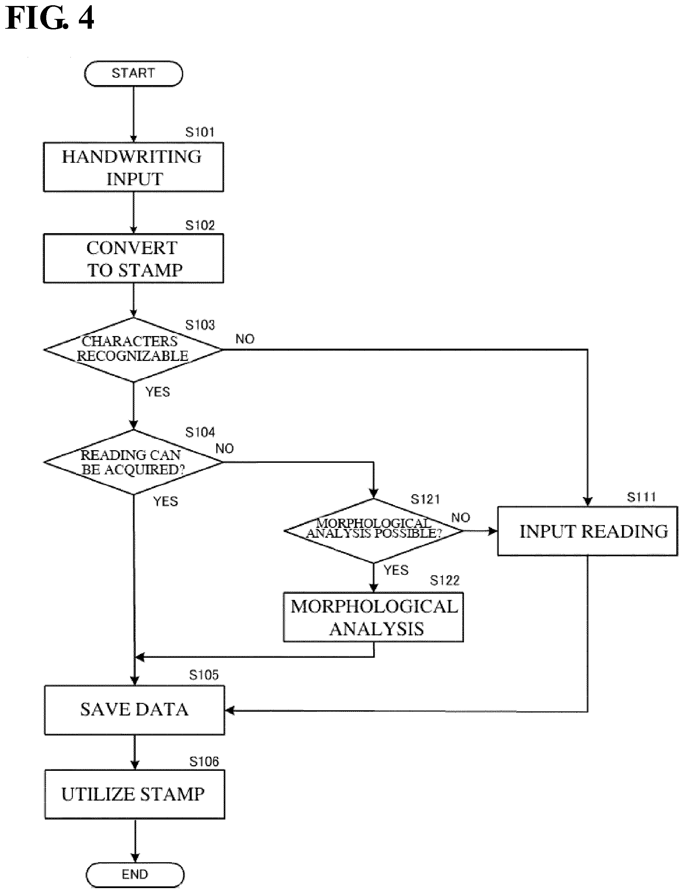

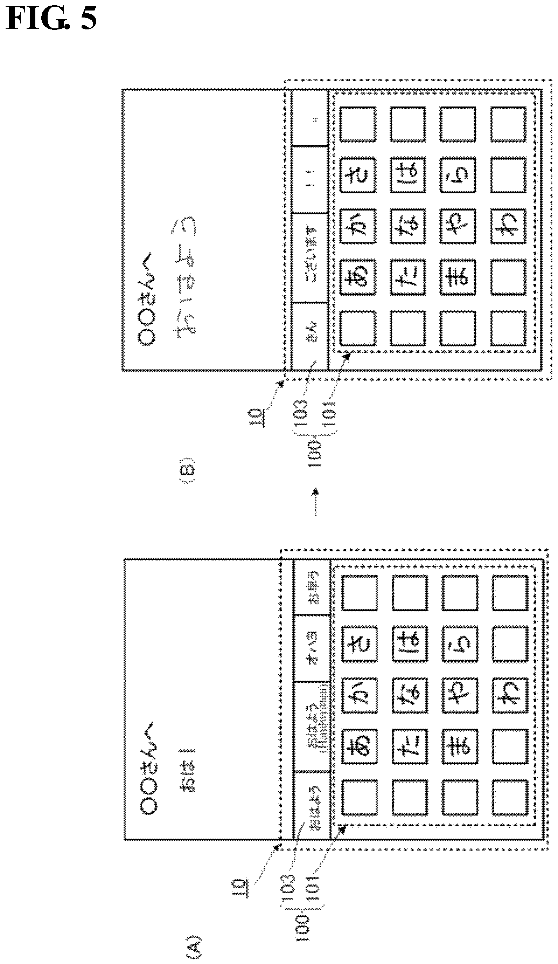

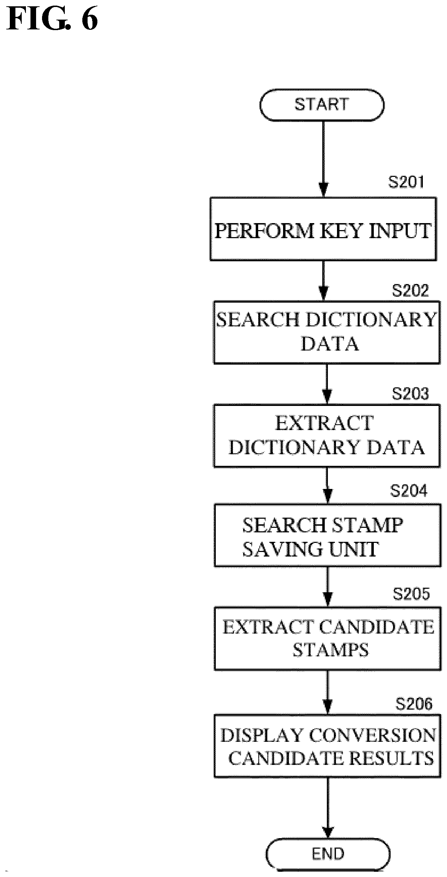

A character input device, a character input method and a character input program according to a first embodiment of the present invention will be described, with reference to the drawings. Fig. 1 is a block diagram showing a main configuration of the character input device according to the first embodiment of the present invention. Fig. 2A is a schematic diagram of an operation unit according to the first embodiment of the present invention, and Fig. 2B is a schematic diagram of the operation unit when a handwriting input function has been activated. Fig. 3 is a diagram showing the association between the character input device and a stamp saving unit according to the first embodiment of the present invention. Fig. 4 is a flowchart at the time of a new registration according to the first embodiment of the present invention. Figs. 5A and 5B are schematic diagrams of operations of the character input device at the time of using a handwritten stamp according to the first embodiment of the present invention. Fig. 6 is a flowchart at the time of utilizing a stamp according to the first embodiment of the present invention.

The character input device of the present invention is used by a device that can perform manipulation and character input, as a result of a display screen such as a touch panel being pressed.

As shown in Fig. 1, a character input device 10 is provided with an operation unit 100, an input character management unit 110, a stamp creation unit 120, a character recognition unit 130, a saving unit 140, a dictionary data unit 141 and a transmission unit 150. The operation unit 100 is provided with a software keyboard 101, a character input unit 102, a candidate display unit 103 and an operation acceptance unit 105.

Fig. 2A and Fig. 2B are diagrams showing the operation unit 100. As shown in Fig. 2A the operation unit 100 is provided with a software keyboard 101. A handwriting input button 20 is included in the software keyboard 101. As shown in Fig. 2B, the operation unit 100 is provided with a character input unit 102 and an operation button group 30. The operation button group is provided with a stamp button 31, a delete button 32, and an OK button 33.

As a result of pressing the handwriting input button 20 in Fig. 2A, the operation unit 100 switches to the mode of Fig. 2B. The character input unit 102 is an area in which characters can be handwritten with a finger or the like. For example, the characters " 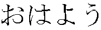 " ("ohayou" (good morning)) are written by hand in the character input unit 102. Henceforth, characters written by hand will be described as handwritten characters.

The stamp button 31 is pressed, in the case of converting handwritten characters to a stamp. Also, the delete button 32 is pressed, in the case of deleting handwritten characters. The OK button 33 is pressed, when finalizing handwritten characters.

Fig. 3 is a diagram specifically showing the relationship with the saving unit 140 in the case where an operation has been performed using the operation button group 30, with the saving unit 140 and a data image of the saving unit 140 having been added to the configuration of Fig. 2B.

A method of creating a stamp from handwritten characters and utilizing the stamp will be described using Figs. 1 and 3. Note that a state in which the character input unit 102 has already been activated and " 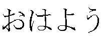 " has been input by handwriting on the operation unit 100 with the character input unit 102 is initially shown.

The operation acceptance unit 105 accepts processing that results from the stamp button 31 being pressed, and conveys this processing to the input character management unit 110. The input character management unit 110 outputs image data that includes the handwritten characters " 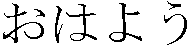 " to the stamp creation unit 120. The stamp creation unit 120 extracts the handwritten character portion " 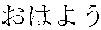 ", and creates a stamp.

Furthermore, the input character management unit 110 conveys the handwritten characters " 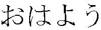 " to the character recognition unit 130. The character recognition unit 130 performs character recognition on the handwritten characters " 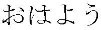 ", and recognizes the character string " 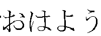 " consisting of the combination of characters " 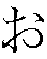 ", " 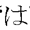 ", " 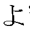 " and " 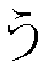 ". As a result of this method, a reading of the stamp " 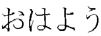 " input by handwriting with the character input unit 102 is automatically acquired.

The input character management unit 110 associates the stamp created by the stamp creation unit 120 and the reading recognized by the character recognition unit 130, and saves the associated stamp and reading to the saving unit 140.

Next, the input character management unit 110 outputs the stamp " 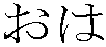 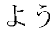 " to the transmission unit 150. The transmission unit 150 receives the stamp " 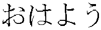 ", and transmits the received stamp to an external application.

As a result of this processing, handwritten characters input with the character input unit 102 can be saved as a stamp, a reading of the handwritten characters can be automatically recognized, and the reading and the stamp can be saved in association with each other. Furthermore, the stamp can be directly utilized by an application.

Accordingly, the user does not need to switch applications to perform the operations of inputting handwritten characters and saving the characters as a stamp. That is, rather than the complex flow involved in operations such as utilizing stamps after preliminarily registering the stamps, a stamp can be easily registered with a normal series of operations for handwritten character input and this stamp can be utilized.

In the above description, processing according to an example using the hiragana characters " 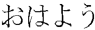 " was shown. However, characters input by handwriting to the character input unit 102 may be katakana characters, alphabetic characters, numeric characters, symbols, Chinese characters or the like.

Note that the case where a reading cannot be recognized with regard to characters input by handwriting with the character input unit 102 will be described. In the case where a character string of handwritten characters cannot be recognized, the input character management unit 110 performs display indicating that the handwritten characters cannot be recognized on a message display unit which is not illustrated. The input character management unit 110 prompts the user to set a reading for the handwritten characters. The operation acceptance unit 105 accepts characters that are keyed in with the software keyboard 101. Furthermore, the input character management unit 110 associates the stamp and the keyed-in reading of the handwritten characters, and saves the associated stamp and reading to the saving unit 140.

Note that, in the abovementioned description, a mode in which the respective processing is executed by individual functional units was shown. However, the abovementioned processing may be realized and stored in the form of a program, and the program may be executed by a computational processing device such as a CPU. In this case, the flow of Fig. 4 need only be executed.

Fig. 4 is a flowchart of a character input method according to the first embodiment of the present invention. The computational processing device accepts input of handwritten characters (S101). The computational processing device performs image conversion to convert the handwritten characters to a stamp (S102). The computational processing device judges whether a reading of the handwritten characters can be recognized. If character recognition of the handwritten characters is possible (S103: Yes), the computational processing device further judges whether the reading can be acquired. If the reading can be acquired (S104: Yes), the computational processing device saves the stamp and the reading in association with each other (S105). The computational processing device transmits the saved stamp to an application, and the stamp is utilized (S106).

If character recognition of the handwritten characters is not possible (S103: No), the computational processing device accepts a reading by key input (S111). The computational processing device saves the stamp and the keyed-in reading in association with each other (S105), and the stamp is utilized (S106).

Also, if the reading of the handwritten characters cannot be acquired (S104: No), the computational processing device judges whether morphological analysis is possible. In the case where morphological analysis is possible (S121: Yes), the computational processing device performs morphological analysis and acquires the reading (S122). The computational processing device saves the stamp and the reading acquired by morphological analysis in association with each other (S105), and the stamp is utilized (S106).

If morphological analysis is not possible (S121: No), the computational processing device judges that character recognition is not possible (S103: No), and performs processing for accepting input of a reading by key input (S111).

In the above description, a method of creating a stamp from handwritten characters and utilizing the stamp was shown. In Figs. 5A, 5B and 6, a method of utilizing a stamp that has already been saved according to the first embodiment of the present invention is shown.

As shown in Figs. 5A and 5B, the character input device 10 is provided with the operation unit 100. The operation unit 100 is provided with the software keyboard 101 and the candidate display unit 103. Also, it is assumed that the character input device 10 has been activated by an application that is not included in the present invention. Note that it is assumed that the dictionary data unit 141 (refer to Fig. 1) includes dictionary data that enables character conversion and predictive conversion.

As shown in Fig. 5A, " 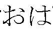 " (oya), for example, is input, using the software keyboard 101. Candidates obtained by searching the saving unit 140 and candidates obtained by searching the dictionary data unit 141 are displayed on the candidate display unit 103.

First, " 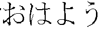 " ("ohayou"), " 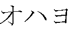 " ("ohayo") and " 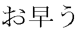 " ("ohayou") are returned as results, by searching the dictionary data unit 141 for candidates containing the character string " 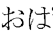 ". Next, " 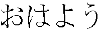 (handwritten)" is returned as results, by searching the saving unit 140 for stamps containing the character string " 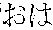 ". Note that the above candidates are examples, and the wording and number of candidates that are displayed depends on the search logic.

Both the results obtained by searching the saving unit 140 and the results obtained by searching the dictionary data unit 141 are displayed on the candidate display unit 103. Note that the order in which the candidates are displayed depends on the search logic.

Fig. 5B is a diagram showing the result of having selected " 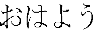 (handwritten)" in Fig. 5A. As a result of " 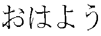 (handwritten)" being selected on the candidate display unit 103 in Fig. 5A, the operation acceptance unit 105 detects that the user has selected " 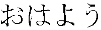 (handwritten)". The operation acceptance unit 105 conveys that " 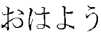 (handwritten)" has been selected to the input character management unit 110.

The input character management unit 110 finds the stamp " 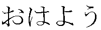 " that is saved in the saving unit 140, and receives the stamp " 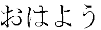 ". The input character management unit 110 outputs the stamp " 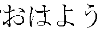 " to the transmission unit 150. The transmission unit 150 transmits the stamp " 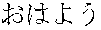 " to the application. As a result, the stamp " 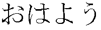 " is inserted in the application of Fig. 5B.

Note that, in the abovementioned description, a mode in which the respective processing is executed by individual functional units was shown. However, the abovementioned processing may be realized and stored in the form of a program, and the program may be executed by a computational processing device such as a CPU. In this case, the flow of Fig. 6 need only be executed.

Fig. 6 shows a flowchart of a method of utilizing a stamp. Furthermore, the computational processing device searches the dictionary data unit 141 (S201), and extracts dictionary data to serve as candidates (S202). The computational processing device accepts key input using the software keyboard 101 (S203). The computational processing device searches the saving unit 140 for readings that match the character string that was keyed in (S204), and extracts stamps to serve as candidates (S205). The computational processing device displays the stamps serving as candidates and the dictionary data serving as candidates on the candidate display unit 103 (S206).

Note that, in the case where corresponding data does not exist in the saving unit and the dictionary data, the computational processing device displays only the keyed-in characters on the candidate display unit 103.

### Second Embodiment

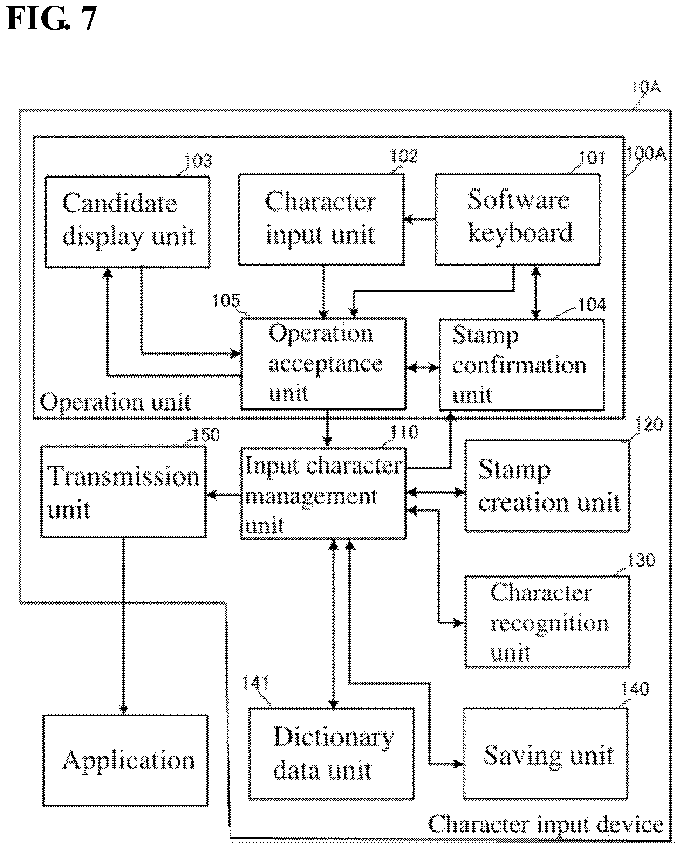

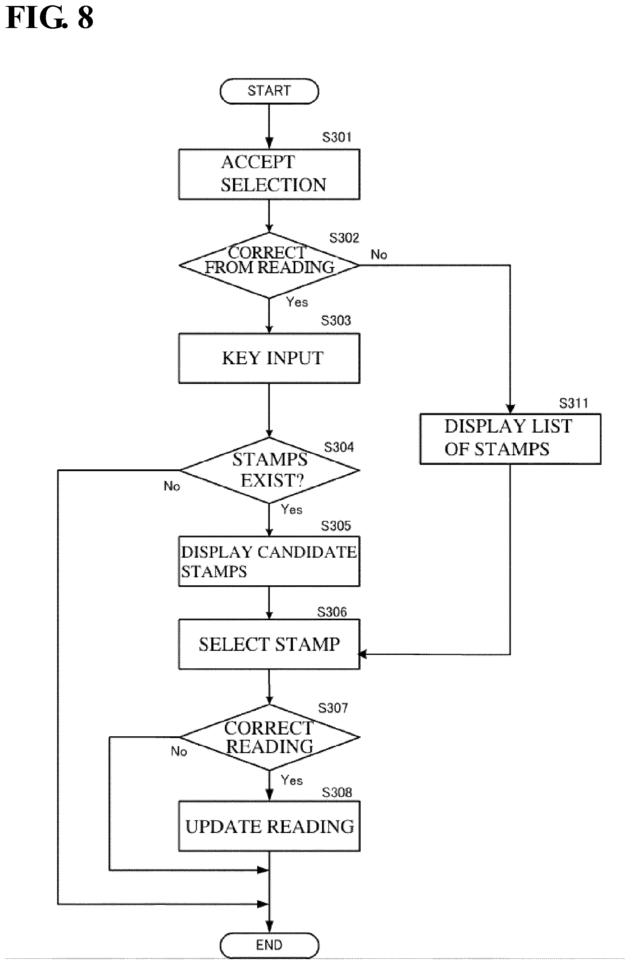

A character input device, a character input method and a character input program according to a second embodiment of the present invention will be described, with reference to the drawings. Fig. 7 is a functional block diagram of the character input device according to the second embodiment of the present invention. Fig. 8 is a flowchart at the time of changing a reading according to the second embodiment of the present invention.

As shown in Fig. 7, a character input device 10A according to the second embodiment differs from the character input device 10 according to the first embodiment in that a stamp confirmation unit 104 is added to an operation unit 100A. The remaining configuration of the character input device 10A is similar to the character input device 10, and description of similar points will be omitted.

The stamp confirmation unit 104 displays and edits readings of registered stamps. The operation acceptance unit 105 accepts an instruction for displaying registered stamps from the stamp confirmation unit 104. The input character management unit 110 searches the saving unit 140, and acquires a list of data in which stamps and readings are associated. The input character management unit 110 outputs the list acquired from the saving unit 140 to the stamp confirmation unit 104.

The stamp confirmation unit 104 displays the associations between stamps and readings. Here, in the case of correcting the reading of a stamp, the stamp confirmation unit 104 accepts a correction of the reading. For example, in the case of correcting a reading, the reading is keyed in with the software keyboard 101. The operation acceptance unit 105 accepts the stamp and the corrected reading, and outputs the stamp and the reading to the input character management unit 110. Furthermore, the input character management unit 110 saves the stamp and the keyed-in reading of the handwritten characters to the saving unit 140 in association with each other.

Note that, in the abovementioned description, a mode in which the respective processing is executed by individual functional units was shown. However, the abovementioned processing may be realized and stored in the form of a program, and the program may be executed by a computational processing device such as a CPU. In this case, the flow of Fig. 8 need only be executed.

Fig. 8 shows a flowchart for confirming and correcting the reading of a stamp. The computational processing device accepts selection of a correction method (S301). In the case of performing correction based on the reading of a stamp (S302: Yes), the computational processing device accepts key input (S303). The computational processing device judges whether stamps exist (S304: Yes), and displays a list of stamps and readings (S305). The computational processing device selects a stamp (S306), confirms whether the reading of the stamp needs to be corrected, and, in the case of correcting the reading (S307: Yes), updates the reading (S308). Also, in the case of performing correction by selecting a stamp (S302: No), the computational processing device displays a list of stamps (S311). The computational processing device selects a stamp (S306), confirms whether the reading of the stamp needs to be corrected, and, in the case of correcting the reading (S307: Yes), updates the reading (S308).

Note that although, in the above embodiments, the case where the processing of the present invention is activated by an external application that is not included in the present invention was described, it is also possible to execute the processing of the present invention independently.

Also, although, in the configurations of the above embodiments, a configuration using key input was described, the configuration need only be provided with a function of being able to input readings, such as by audio input, for example, and is not limited to key input.

## Claims

1. A character input device (10), comprising:
an operation unit (100) configured to accept an input operation of a handwritten character and display the handwritten character;
a stamp creation unit (120) configured to perform image conversion on the handwritten character to create a stamp;
a character recognition unit (130) configured to recognize a reading of the handwritten character;
a saving unit (140) configured to save the stamp and the reading of the handwritten character; and
an input character management unit (110),
wherein the operation unit (100) includes a candidate display unit (103),
**characterized in that**:
the operation unit (100) further comprises a software keyboard (101), and
the input character management unit (110) is configured to output the stamp as a conversion candidate to the candidate display unit (103) when a character string input with the operation unit (100) using the software keyboard (101) matches the reading of the corresponding handwritten character.

2. The character input device (10) according to claim 1, wherein the input character management unit (110) is configured to, in a case where the reading cannot be recognized by the character recognition unit (130), associate the stamp with a character string keyed in with the operation unit (100).

3. The character input device (10) according to claim 1, wherein the input character management unit (110) is configured to associate the stamp with the reading which is changed with the operation unit (100).

4. The character input device (10) according to claim 1, comprising:
a transmission unit (150) configured to transmit the stamp to an application,
wherein the stamp which is selected with the candidate display unit (103) is transmitted.

5. A character input method according to which a computational processing device executes:
a step (S101) having a function of accepting input of and displaying a handwritten character;
a step (S102) of performing image conversion to convert the handwritten character to a stamp;
a step (S103) of recognizing a reading of the handwritten character; and
a step (S105) of saving the stamp and the reading of the handwritten character,
**characterized by**:
a step (S111) of inputting a character string using a software keyboard (101), and
a step of outputting the stamp as a conversion candidate when a character string input using the software keyboard (101) matches the reading of the corresponding handwritten character.

6. A character input program that causes a computational processing device to execute:
processing having a function of accepting input of and displaying a handwritten character;
processing for performing image conversion to convert the handwritten character to a stamp;
processing for recognizing a reading of the handwritten character; and
processing for saving the stamp and the reading of the handwritten character,
**characterized by**:
a process of inputting a character string using a software keyboard (101), and
a process of outputting the stamp as a conversion candidate when a character string input using the software keyboard (101) matches the reading of the corresponding handwritten character.

## Patentansprüche

1. Zeicheneingabevorrichtung (10) aufweisend:
eine Bedieneinheit (100), die eingerichtet ist, eine Eingabebedienung eines handgeschriebenen Zeichens zu empfangen und das handgeschriebene Zeichen anzuzeigen;
eine Stempelerzeugungseinheit (120), die eingerichtet ist, das handgeschriebene Zeichen einer Bildumwandlung zu unterwerfen und einen Stempel zu erzeugen;
eine Zeichenerkennungseinheit (130), die eingerichtet ist, eine Lesung des handgeschriebenen Zeichens zu erkennen;
eine Abspeichereinheit (140), die eingerichtet ist, den Stempel und die Lesung des handgeschriebenen Zeichens abzuspeichern; und
eine Verwaltungseinheit (110) zur Verwaltung eingegebener Zeichen,
wobei die Bedieneinheit (100) eine Kandidatenanzeigeeinheit (103) umfasst,
**dadurch gekennzeichnet, dass**
die Bedieneinheit (100) ferner ein Softwarekeyboard (101) aufweist, und
die Verwaltungseinheit (110) zur Verwaltung eingegebener Zeichen eingerichtet ist, den Stempel als Umwandlungskandidat an die Kandidatenanzeigeeinheit (103) auszugeben, wenn eine mit der Bedieneinheit (100) unter Verwendung des Softwarekeyboards (101) eingegebene Zeichenkette mit der Lesung des entsprechenden handgeschriebenen Zeichens übereinstimmt.

2. Zeicheneingabevorrichtung (10) gemäß Anspruch 1,
wobei die Verwaltungseinheit (110) zur Verwaltung eingegebener Zeichen eingerichtet ist, den Stempel mit einer mit der Bedieneinheit (100) eingegebenen Zeichenkette zu verknüpfen, falls die Lesung von der Zeichenerkennungseinheit (130) nicht erkannt werden kann.

3. Zeicheneingabevorrichtung (10) gemäß Anspruch 1,
wobei die Verwaltungseinheit (110) zur Verwaltung eingegebener Zeichen eingerichtet ist, den Stempel mit einer Lesung zu verknüpfen, die mit der Bedieneinheit (10) geändert wurde.

4. Zeicheneingabevorrichtung (10) gemäß Anspruch 1, umfassend:
eine Sendeeinheit (150), die eingerichtet ist, den Stempel an eine Anwendung zu senden,
wobei der mit der Kandidatenanzeigeeinheit (103) ausgewählte Stempel übertragen wird.

5. Zeicheneingabeverfahren gemäß dem eine Computerverarbeitungsvorrichtung Folgendes ausführt:
einen Schritt (S101) mit der Funktion, eine Eingabe zu empfangen und ein handgeschriebenes Zeichen anzuzeigen;
einen Schritt (S102), um eine Bildverarbeitung durchzuführen, um das handgeschriebene Zeichen in einen Stempel umzuwandeln;
einen Schritt (S103), um eine Lesung des handgeschriebenen Zeichens zu erkennen; und
einen Schritt (S105), um den Stempel und die Lesung des handgeschriebenen Zeichens abzuspeichern,
**gekennzeichnet durch**:
einen Schritt (S111) zur Eingabe einer Zeichenkette unter Verwendung eines Software-Keyboards (101), und
einen Schritt zur Ausgabe des Stempels als Umwandlungskandidat, wenn eine unter Verwendung des Software-Keyboards (101) eingegebene Zeichenkette mit der Lesung des entsprechenden handgeschriebenen Zeichens übereinstimmt.

6. Zeicheneingabeprogramm, das eine Computerverarbeitungsvorrichtung Folgendes ausführen lässt:
eine Verarbeitung mit der Funktion, eine Eingabe zu empfangen und ein handgeschriebenes Zeichen anzuzeigen;
eine Verarbeitung, um eine Bildverarbeitung durchzuführen, um das handgeschriebene Zeichen in einen Stempel umzuwandeln;
eine Verarbeitung, um eine Lesung des handgeschriebenen Zeichens zu erkennen; und
eine Verarbeitung, um den Stempel und die Lesung des handgeschriebenen Zeichens abzuspeichern,
**gekennzeichnet durch**:
eine Verarbeitung zur Eingabe einer Zeichenkette unter Verwendung eines Software-Keyboards (101), und
eine Verarbeitung zur Ausgabe des Stempels als Umwandlungskandidat, wenn eine unter Verwendung des Software-Keyboards (101) eingegebene Zeichenkette mit der Lesung des entsprechenden handgeschriebenen Zeichens übereinstimmt.

## Revendications

1. Dispositif d'entrée de caractères (10), comprenant :
une unité d'opération (100) configurée pour accepter une opération d'entrée d'un caractère manuscrit et pour afficher le caractère manuscrit ;
une unité de création de tampon (120) configurée pour effectuer une conversion d'image sur le caractère manuscrit afin de créer un tampon ;
une unité de reconnaissance de caractères (130) configurée pour reconnaître une lecture du caractère manuscrit ;
une unité de sauvegarde (140) configurée pour sauvegarder le tampon et la lecture du caractère manuscrit ; et
une unité de gestion des caractères d'entrée (110),
dans lequel l'unité d'opération (100) comprend une unité d'affichage du candidat (103),
**caractérisé en ce que** :
l'unité d'opération (100) comprend en outre un clavier logiciel (101), et
l'unité de gestion des caractères d'entrée (110) est configurée pour sortir le tampon en tant que candidat à la conversion vers l'unité d'affichage du candidat (103) lorsqu'une chaîne de caractères entrée avec l'unité d'opération (100) à l'aide du clavier logiciel (101) correspond à la lecture du caractère manuscrit correspondant.

2. Dispositif d'entrée de caractères (10) selon la revendication 1,
dans lequel l'unité de gestion des caractères d'entrée (110) est configurée pour, dans le cas où la lecture ne peut pas être reconnue par l'unité de reconnaissance de caractères (130), associer le tampon à une chaîne de caractères saisie avec l'unité d'opération (100).

3. Dispositif d'entrée de caractères (10) selon la revendication 1,
dans lequel l'unité de gestion des caractères d'entrée (110) est configurée pour associer le tampon à la lecture qui est modifiée avec l'unité d'opération (100).

4. Dispositif d'entrée de caractères (10) selon la revendication 1, comprenant :
une unité de transmission (150) configurée pour transmettre le tampon à une application,
dans lequel le tampon qui est sélectionné avec l'unité d'affichage du candidat (103) est transmis.

5. Procédé d'entrée de caractères selon lequel un dispositif de traitement informatique exécute :
une étape (S101) ayant pour fonction d'accepter l'entrée d'un caractère manuscrit et de l'afficher ;
une étape (S102) de conversion d'image pour convertir le caractère manuscrit en tampon ;
une étape (S 103) de reconnaissance de la lecture du caractère manuscrit ; et
une étape (S105) de sauvegarde du tampon et de la lecture du caractère manuscrit,
**caractérisé par** :
une étape (S111) de saisie d'une chaîne de caractères à l'aide d'un clavier logiciel (101), et
une étape de sortie du tampon comme candidat à la conversion lorsqu'une chaîne de caractères entrée à l'aide du clavier logiciel (101) correspond à la lecture du caractère manuscrit correspondant.

6. Programme d'entrée de caractères qui fait exécuter un dispositif de traitement informatique :
un traitement ayant pour fonction d'accepter une entrée et d'afficher un caractère manuscrit ;
un traitement permettant d'effectuer une conversion d'image pour convertir le caractère manuscrit en tampon ;
le traitement pour la reconnaissance d'une lecture du caractère manuscrit ; et
le traitement pour la sauvegarde du tampon et la lecture du caractère manuscrit,
**caractérisé par** :
un processus de saisie d'une chaîne de caractères à l'aide d'un clavier logiciel (101), et
un processus d'émission du tampon comme candidat à la conversion lorsqu'une chaîne de caractères saisie à l'aide du clavier logiciel (101) correspond à la lecture du caractère manuscrit correspondant.
